# EUROPÄISCHE PATENTANMELDUNG

(11) **EP 4 300 227 A1**
(43) Veröffentlichungstag der Anmeldung: **03.01.2024**
(21) Anmeldenummer: 22182200.0
(22) Anmeldetag: 30.06.2022
(51) Int. Cl.: G05B 19/418, G05B 19/042

(54) **STEUERUNG VON FÖRDERSTRECKEN-ANLAGEN FÜR STÜCKGÜTER**

(71) Anmelder: Siemens Aktiengesellschaft, 80333 München (DE)
(72) Erfinder: TOKIC, Michel, 88069 Tettnang (DE); VON BEUNINGEN, Anja, 99085 Erfurt (DE); BISCHOFF, Martin, 85653 Aying, Großhelfendorf (DE); KÖRWER, Niklas, 51065 Köln (DE); GROSSENBACHER, David, 160 00 Prag 6-Dejvice (CZ); HEESCHE, Kai, 81539 München (DE)
(74) Vertreter: Siemens Patent Attorneys

(57) **Zusammenfassung**

Die Erfindung betrifft ein Verfahren zur Steuerung einer Förderstrecke für Stückgut (P1, P2, P3), wobei die Förderstrecke eine Mehrzahl sich aneinander anschließender Teilförderstrecken (C2, C3, C4, C5) umfasst, welche jeweils von einem Antrieb angetrieben werden. An zumindest manchen der Teilförderstrecken (C1, C2, C3, C4, C5) befinden sich einer oder mehrere Sensoren zur Detektion von Stückgut (P, P1, P2, P3). Die Steuerung der Antriebe erfolgt mittels einer Recheneinheit mit einem Machine-Learning-Modell. Das Machine-Learning-Modell empfängt hierzu wiederholt Eingangsdaten umfassend einen Vektor (VECTOR) einer festen Länge, wobei jedes Vektorelement einem Abschnitt (BIN) der Förderstrecke zugeordnet ist und eine aktuelle anteilige Belegung des jeweiligen Abschnitts (BIN) mit einem Stückgut (P, P1, P2, P3) angibt. Jede Teilförderstrecke (C1, C2, C3, C4, C5) ist in eine Mehrzahl der gleich großen Abschnitte (BIN) aufgeteilt. Weiterhin betrifft die Erfindung hierzu korrespondierend eine Vorrichtung oder ein System zur Datenverarbeitung, ein Computerprogramm, einen computerlesbaren Datenträger, sowie ein Datenträgersignal.

## Beschreibung

Die Erfindung betrifft die Steuerung von Förderstrecken für Stückgüter.

Viele Logistiksysteme basieren darauf, dass auf Förderstrecken Stückgüter wie z.B. Pakete oder einzelne Produkte transportiert werden. Eine Förderstrecke setzt sich hierbei üblicherweise aus einer Mehrzahl von Teilförder-strecken zusammen, welche hintereinander angeordnet sind, so dass ein Stückgut unterbrechungsfrei von einer Teilförderstrecke an eine andere, angrenzende Teilförder-strecke übergeben werden kann. Jede Teilförderstrecke enthält ein Förderband, auf welchem das Stückgut bewegt wird. Alternativen zu Förderbänder sind Schienensysteme oder Multi-Carrier-Systeme. Mehrere solcher Förderstrecken können wiederum beliebig kompliziert kombiniert werden, z.B. indem mehrere Förderstrecken parallel zueinander verlaufen und in einen gemeinsamen Knoten münden.

Die Förderbänder der Teilförderstrecken werden jeweils mit einem eigenen Antrieb angetrieben, so dass die Geschwindigkeit jeder Teilförderstrecke individuell einstellbar ist. Diese Ansteuerung erfolgt üblicherweise mit einer schnellen Taktung, so dass sehr genau einstellbar ist, welchen Zielort ein Stückgut insbesondere auf der letzten Teilförderstrecke treffen soll. Dies erfordert, dass die Teilförderstrecken aufgrund von Steuersignalen einer Recheneinheit optimal von ihrem jeweils zugeordneten Antrieb beschleunigt oder verzögert werden. Schlechte Steuerung äußert sich z.B. dadurch, dass Stückgüter kollidieren, von der Förderstrecke fallen, nicht den erwünschten Zielort erreichen, oder sehr lange brauchen, um dort anzukommen.

Der Erfindung liegt die Aufgabe zugrunde, ein Verfahren zum Steuern einer Förderstrecke aufzuzeigen.

Diese Aufgabe wird durch ein Verfahren mit den Merkmalen des Anspruchs 1 gelöst. Ferner sind Gegenstand der Erfindung eine entsprechende Vorrichtung oder ein System zur Datenverarbeitung, ein entsprechendes Computerprogramm, ein entsprechendes computerlesbares, vorzugsweise nichtflüchtiges, Speichermedium, und ein entsprechendes Datenträgersignal. Vorteilhafte Ausgestaltungen und Weiterbildungen sind Gegenstand von Unteransprüchen.

Das erfindungsgemäße Verfahren dient der Steuerung einer Förderstrecke für Stückgut. Diese Förderstrecke umfasst eine Mehrzahl sich aneinander anschließender Teilförderstrecken, welche jeweils von einem Antrieb angetrieben werden. An zumindest manchen der Teilförderstrecken befindet sich ein oder mehrere Sensoren zur Detektion von Stückgut. Die Steuerung der Antriebe erfolgt mittels einer Recheneinheit mit einem Machine-Learning-Modell. Das Machine-Learning-Modell empfängt hierzu wiederholt Eingangsdaten umfassend einen Vektor einer festen Länge, wobei jedes Vektorelement einem Abschnitt der Förderstrecke zugeordnet ist und eine aktuelle anteilige Belegung des jeweiligen Abschnitts mit einem Stückgut angibt. Hierbei ist die Förderstrecke in eine Mehrzahl der gleich großen Abschnitte aufgeteilt. Außer diesem Vektor fester Länge können die Eingangsdaten weitere Informationen enthalten.

Dadurch, dass die Teilförderstrecken jeweils über einen eigenen Antrieb verfügen, können sie individuell beschleunigt oder verzögert werden. Diese Beschleunigung oder Verzögerung kann auch einen Beschleunigungs- oder verzögerungswert von 0 umfassen, d.h. eine Teilförderstrecke kann auch zumindest zeitweise mit konstanter Geschwindigkeit betrieben werden. Durch das selektive Beschleunigen oder Verzögern jeder Teilförderstrecke kann ein für die Förderstrecke vorgegebenes Ziel erreicht werden, z.B. dass die transportierten Stückgüter sich in definierten Abständen zueinander auf der letzten Teilförderstrecke einfinden.

Zumindest eine der Teilförderstrecken ist mit einem Sensor zur Detektion von Stückgut ausgestattet. Es ist möglich, dass manche oder alle der Teilförderstrecken einen solchen Sensor aufweisen, und auch, dass mehrere Sensoren pro Teilförderstrecke vorgesehen sind. Die Positionierung der Sensoren in Bezug auf die Erstreckung der Teilförderstrecken kann die gleiche sein, z.B. jeweils am Anfang einer Teilförderstrecke, sie kann sich aber auch von Teilförderstrecke zu Teilförderstrecke unterscheiden. Vorzugsweise handelt es sich bei den Sensoren um Lichtschranken. Andere Beispiele für geeignete Sensoren sind: 2D/3D-Kameras, RFID-Empfänger in Kombination mit RFID-Tags auf dem Stückgut, Induktionsschleifen.

Gesteuert werden die Antriebe der Teilförderstrecken durch eine Recheneinheit. Diese gibt den Antrieben vor, welche Geschwindigkeit einzustellen ist oder alternativ, welche Beschleunigung oder Verzögerung.

Berechnet wird dies von einem Machine-Learning-Modell. Hierzu benötigt das Machine-Learning-Modell Eingangsdaten, welche den aktuellen Zustand der Förderstrecke beschreiben. Diese Eingangsdaten sollen insbesondere beschreiben, wo sich aktuell Stückgüter auf der Förderstrecke befinden. Diese Stückgüter-Positions-Angabe erfolgt mit einem Vektor fester Länge, d.h. jedes Mal, wenn das Machine-Learning-Modell neue Eingangsdaten empfängt, welche die Positionen von Stückgütern angeben, hat der diese Positionen anzeigende Vektor die gleiche Anzahl von Vektorelementen. Hierzu wird die Förderstrecke gedanklich in gleich lange Abschnitte aufgeteilt. Im für die Steuerung relevanten Teil der Förderstrecke, z.B. von dem ersten bis zu dem letzten Sensor, gehört also kein Teil der Förderstrecke nicht zu einem der Abschnitte; dieser Teil ist also vollständig in die Abschnitte aufgeteilt. Die einzelnen Teilförderstrecken können hierbei in eine voneinander unterschiedliche Anzahl von Abschnitten aufgeteilt sein, da ihre Längen sich voneinander unter-scheiden können. Jeder Abschnitt korrespondiert zu einem Vektorelement. Das jeweilige Vektorelement zeigt an, welcher Anteil des Abschnittes von einem Stückgut belegt ist. Jeder Abschnitt kann vollständig, teilweise oder gar nicht von einem Stückgut belegt sein. Z.B. kann ein Stückgut auf der vorderen Hälfte eines Abschnittes und dem hinteren Drittel eines vorhergehenden Abschnittes liegen.

Bei den Eingangsdaten, welche dem Machine-Learning-Modell zur Verfügung gestellt werden, handelt es sich um aktuelle Informationen, d.h. sie beschreiben den aktuellen Zustand der Förderstrecke. Dies schließt selbstverständlich einen gewissen zeitlichen Verzug nicht aus, welcher zwischen der Ermittlung des Zustands der Förderstrecke und dem Empfang der Eingangsdaten durch das Machine-Learning-Modell liegen kann.

In Weiterbildung der Erfindung empfängt das Machine-Learning-Modell aktualisierte Eingangsdaten in einer zeitlichen Taktung, und in der gleichen Taktung gibt es Informationen aus über eine einzustellende Geschwindigkeit für jede Teilförderstrecke. Je schneller die Taktung, desto genauer ist die Steuerung der Förderstrecke. Moderne Förderstrecken arbeiten mit einer Steuertaktung im Millisekunden-Bereich.

Einer Ausgestaltung der Erfindung gemäß wird die anteilige Belegung ermittelt aus Messergebnissen von Sensoren und Geschwindigkeiten von Teilförderstrecken. Dies ermöglicht es, eine Kombination aus Messung und Berechnung zur Beschreibung des Zustands der Förderstrecke zu verwenden. Insbesondere kann für ein bestimmtes Stückgut die aktuelle anteilige Belegung im Zeitverlauf ermittelt werden, indem ein Sensor das Stückgut detektiert und dieses Messergebnis dem oder den jeweiligen die entsprechende Position enthaltenden Abschnitten zugewiesen wird, bis zum nächsten Sensor eine rechnerische Ermittlung der Position des Stückgutes erfolgt unter Verwendung der Geschwindigkeit der jeweiligen Teilförderstrecke und dieses Rechenergebnis dem oder den jeweiligen die entsprechende Position enthaltenden Abschnitten zugewiesen wird, dann der nächste Sensor das Stückgut detektiert und dieses Messergebnis dem oder den jeweiligen die entsprechende Position enthaltenden Abschnitten zugewiesen wird. Im Zeitablauf bewegen sich die die Belegung der Abschnitte anzeigenden Vektorwerte somit von dem einen Sensor durch die Strecke bis zum nächsten Sensor. Dieser Wechsel von Verwendung der Messwerte bei einer Detektion des Stückgutes durch einen Sensor und Verwendung von berechneten Werten für die Strecke zwischen den Sensoren kann für die gesamte Länge der Förderstrecke angewandet werden. Es gilt, dass dann, wenn ein Sensor ein Stückgut detektiert, dies in den Vektor eingetragen wird. Dies gilt auch für den Fall, dass die rechnerische Verfolgung des Stückguts zwischen den Sensoren einen anderen Zeitpunkt des Erreichens des Sensors indiziert.

Vorteilhafterweise gibt jedes Vektorelement die aktuelle anteilige Belegung mit einem nicht-binären Wert an, vorzugsweise mit einem Zahlenwert zwischen 0 und 1. Hierbei kann z.B. 0 für "kein Stückgut auf dem Abschnitt" stehen, 1 für "Abschnitt vollständig von einem Stückgut belegt", und 0.5 für "die Hälfte des Abschnittes ist von einem Stückgut belegt".

In Weiterbildung der Erfindung umfassen die Eingangsdaten ferner:
- aktuelle Informationen betreffend zumindest eine Position von zumindest einer Stelle auf der letzten Teilförderstrecke; hierbei kann es sich um eine Markierung wie z.B. eine Nulllinie handeln, oder auch um eine Zielregion, in welcher ein Stückgut landen soll. Diese Stelle bewegt sich mit der jeweiligen Geschwindigkeit der Teilförderstrecke.
   und/oder
- Informationen betreffend die aktuellen Geschwindigkeiten der Teilförderstrecken,
   und/oder
- aktuelle Messergebnisse der Sensoren; dies beinhaltet, welcher Sensor aktuell ein Stückgut detektiert oder nicht.

In Ausgestaltung der Erfindung wird das Machine-Learning-Modell vor der Steuerung der Förderstrecke trainiert, wobei zum Training dem Machine-Learning-Modell Eingangsdaten umfassend den Vektor der festen Länge vorgegeben werden, wobei die Vektorelemente aus einer Simulation der Förderstrecke ermittelt werden. Die Eingangsdaten bei dem Training des Machine-Learning-Modells sollen von der gleichen Art sein wie diejenigen bei der tatsächlichen Steuerung. Im Unterschied zur tatsächlichen Steuerung entspringen die Daten beim Training jedoch nicht dem realen System, sondern einem virtuellen. Dies ermöglicht eine Interaktion zwischen dem Machine-Learning-Modell und der Simulation, ohne dass Stückgut dabei zu Schaden kommt oder großer Zeitaufwand durch Messungen an einem echten System anfällt.

Besonders vorteilhaft ist es, wenn das Training als verstärkendes Lernen erfolgt, bei welchem zur Ermittlung einer Belohnung oder Bestrafung eine Zielfunktion eingesetzt wird, welche umfasst:
- Erreichen einer vorgegebenen Stelle auf der einer, vorzugsweise der letzten Teilförderstrecke durch ein Stückgut; dieses Erreichen oder Nichterreichen würde eine Belohnung bzw. Bestrafung bewirken.
   und/oder
- Kollision mehrerer Stückgüter auf der Förderstrecke; dieses Ereignis würde eine Bestrafung bewirken.
   und/oder
- Ähnlichkeit von Geschwindigkeiten benachbarter Teilförderstrecken; eine ähnliche Geschwindigkeit zweier aufeinanderfolgender Teilförderstrecke ist vorteilhaft für die Übergabe des Stückgutes von der einen auf die andere Teilförderstrecke hinsichtlich der Vermeidung von Reibungseffekten, so dass dies eine Belohnung bewirken würde. und/oder
- das Einhalten eines Mindest- oder Zielabstand zwischen zwei Stückgütern. Dieser Abstand kann durch einen der Sensoren, vorzugsweise auf der letzten Teilförderstrecke, gemessen werden.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt ablaufen. Es kann beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Es kann auch zumindest teilweise in einer Cloud und/oder in einer Edge-Computing-Umgebung ausgeführt werden. Für den computergestützten Ablauf kommt eines oder mehrere miteinander zusammenwirkende Computerprogramme zum Einsatz. Werden mehrere Programme verwendet, so können diese gemeinsam auf einem Computer gespeichert und von diesem ausgeführt werden, oder auch auf verschiedenen Computern an verschiedenen Orten. Da dies funktional gleichbedeutend ist, wird vorliegend im Singular "das Computergrogramm" und "der Computer" formuliert.

Im Folgenden wird die Erfindung anhand eines Ausführungsbeispiels näher erläutert. Dabei zeigen:
- Figur 1:: eine Förderstrecke,
- Figur 2:: eine Aufteilung einer Förderstrecke in Bins,
- Figur 3:: ein Ablaufdiagramm,
- Figur 4:: eine Steuereinheit für die Bewegungskontrolle einer Förderstrecke,
- Figur 5:: eine detailliertere Darstellung der Steuereinheit.

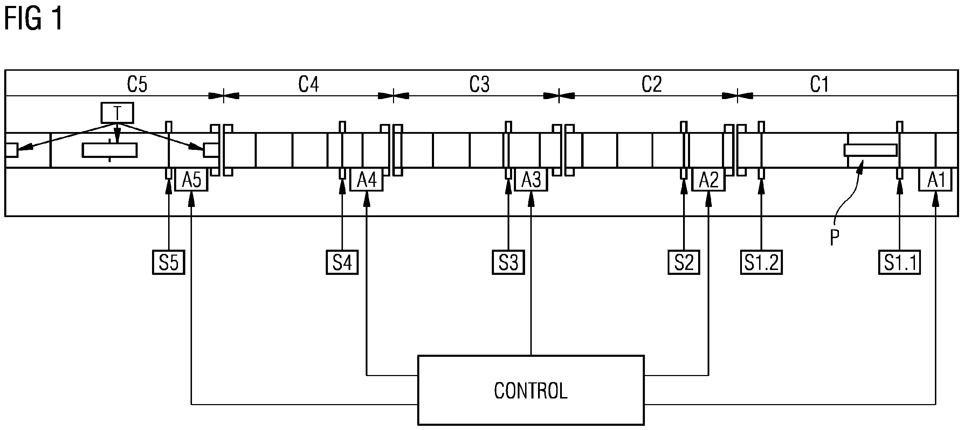

In der Intralogistik oder allgemein im Produktionsumfeld werden oftmals Förderstrecken mit mehreren einzeln ansteuerbaren Förderbandabschnitten verwendet. Figur 1 zeigt eine solche Förderstrecke, welche z.B. für eine Verpackungsmaschine genutzt werden kann. Hier müssen Produkte auf der Förderstrecke beschleunigt / abgebremst werden, um das Produkt passend zur Taktfrequenz einer nicht dargestellten Schlauchbeutelmaschine am Ende der Förderstrecke anzuliefern. In der Darstellung wird das Produkt P von rechts kommend von den Teilförderstrecken in Form der Förder- oder Fließbänder C1, C2, C3, C4, C5 nach links transportiert. Bei dem Produkt P handelt es sich um ein an sich beliebiges Stückgut. Die Förderbänder C1, C2, C3, C4, C5 können gleich lang sein oder unterschiedliche Längen aufweisen.

Jedem der Förderbänder C1, C2, C3, C4, C5 ist jeweils ein Antrieb A1, A2, A3, A4, A5 zugeordnet. Durch entsprechende Ansteuerung der Antriebe A1, A2, A3, A4, A5 mittels einer Steuereinheit CONTROL, illustriert durch die die Ansteuersignale symbolisierenden Pfeile von der Steuereinheit CONTROL zu dem jeweiligen Antrieb A1, A2, A3, A4, A5, können die Förderbänder C1, C2, C3, C4, C5 individuell beschleunigt oder verzögert werden. Das Ziel dieser individuellen Bewegungskontrolle der Förderbänder C1, C2, C3, C4, C5 ist es, das Produkt auf einen bestimmten Zielort T auf dem letzten Förderband C5 zu platzieren. Die Zufuhr der Stückgüter auf die Förderstrecke erfolgt über das als Übergabeeinheit fungierende Förderband C1, welches wie dargestellt auch als Teilförderstrecke ausgebildet ist. Im Allgemeinen liegt somit zufällig, sowohl in Bezug auf die Zeitpunkte als auch auf die Größe, hereinkommendes Stückgut vor, welche auf vorgegebene Positionen abzulegen ist.

Um die Steuereinheit CONTROL in die Lage zu versetzen, geeignete Ansteuersignale zum Beschleunigen und Verzögern der Antriebe A1, A2, A3, A4, A5 zu generieren, sind die Förderbänder C1, C2, C3, C4, C5 mit Sensoren versehen. Im Beispiel der Figur 1 sind die Sensoren S1.1, S1.2, S2, S3, S4, S5 dabei wie folgt verteilt: das erste Förderband C1 besitzt zwei Sensoren, den Sensor S1.1 am Anfang und den Sensor S1.2 am Ende, alle anderen Förderbänder haben jeweils einen Sensor S2, S3, S4 und S5. Die Sensoren können z.B. nicht direkt am Beginn / Ende der einzelnen Förderbänder positioniert sein, sondern einen kleinen Abstand zum Förderbandbeginn haben; im Allgemeinen können jedoch an sich beliebigen Positionen angebracht sein. Es ist auch nicht nötig, dass jedes Förderband mit einem oder mehreren Sensoren versehen ist. Bei den Sensoren S1.1, S1.2, S2, S3, S4, S5 handelt es sich um Lichtschranken. Diese geben die binären Werte LOW und HIGH aus, wobei HIGH bedeutet, dass sich ein Produkt in der Lichtschranke befindet. Ferner können weitere Sensoren zur Ermittlung der Geschwindigkeiten der Förderbänder C1, C2, C3, C4, C5 vorgesehen sein, wie z.B. Drehzahlsensoren zur Detektion der Drehzahl der Antriebe A1, A2, A3, A4, A5, Stromsensoren zur Detektion von Motorströmen der Antriebe A1, A2, A3, A4, A5, usw. Alternativ können die Geschwindigkeiten der Förderbänder C1, C2, C3, C4, C5 als aus den Ansteuersignalen der Steuereinheit CONTROL bekannt vorausgesetzt werden.

Bei der in Figur 1 dargestellten Förderstrecke handelt es sich um ein einfaches Beispiel. Komplexere Förderstrecken finden sich beispielsweise in Paketsortieranlagen, welche mehrere derartige Finger umfassen können, die wiederum mehrere hintereinander geschaltete Förderbandabschnitte beinhalten. Ein konkretes Beispiel hierfür ist ein so genannter "Dynamic Gapper", eine geregelte Antriebsapplikation, die neuerdings in der Intralogistik genutzt wird. Jeder Finger einer Paketsortieranlage ist also im Prinzip wie in Figur 1 dargestellt aufgebaut. Paketsortieranlagen werden u.a. zur Vereinzelung von Paketen unterschiedlicher oder gleicher Größen eingesetzt. Die einzelnen Finger der Paketsortieranlagen sind parallel zueinander verlaufende Förderstrecken. Am Ende dieser Förderstrecken ist eine Vereinigungseinheit, Merger genannt, angeordnet, auf welche die in Förderrichtung letzten Teilförderstrecken die von ihnen transportierten Stückgüter übergeben. An einem Ausgang der Vereinigungseinheit befindet sich eine einzige Ausgangsförderstrecke. Auf diesem ausgehenden Förderband wird der Paketfluss zusammengeführt. Durch die Paketsortieranlage sollen die Produkte also auf dem ausgehenden Band singuliert werden.

Die individuelle Beschleunigung und Verzögerung der Förderbänder der Finger ermöglicht es, auf den verschiedenen Fingern transportiertes Stückgut zeitlich versetzt auf die Vereinigungseinheit zu transportieren. Die Vereinigungseinheit ist dadurch in die Lage versetzt, das Stückgut auf die Ausgangsförderstrecke derart zu fördern, dass jeweils zwei zeitlich aufeinanderfolgende Stückgüter einen vorgegebenen definierten Mindestabstand zueinander aufweisen. Um Kollisionen auf dem Förderband des Zusammenflusses zu vermeiden, ist es sehr hilfreich, wenn parallel verlaufende Pakete möglichst frühzeitig auseinandergezogen werden.

Es sind beliebig komplex verlaufende Förderstrecken denkbar und im Einsatz. Wie auch immer die konkrete Ausgestaltung der Förderstrecke sein mag, ist es Aufgabe der Steuereinheit CONTROL, zu jedem Zeitpunkt und in jeder beliebigen Situation, welche sich durch unterschiedliche Anzahlen, Größen und Positionen der einzelnen Produkte auszeichnet, die optimalen Geschwindigkeiten der einzelnen Förderbänder zu bestimmen und einzustellen. Welche Geschwindigkeiten optimal sind, hängt von der Funktion und Zielsetzung der jeweiligen Förderstrecke ab.

Die Bestimmung einer optimalen Steuerung ist technisch sehr herausfordernd. Klassische Regler tracken die Produktpositionen im Wesentlichen auf Basis der Lichtschrankensignale. Besonders problematisch hierbei ist, dass Übergänge zwischen zwei Förderbändern aufgrund der Reibung und unterschiedlichen Geschwindigkeiten beider Bänder schwer von Hand zu modellieren sind. Zur Verbesserung kann die Anlage mit zusätzlichen Sensoren wie Kameras ausgestattet werden, die die Produktpositionen zu jedem Zeitpunkt sehr genau messen können. Von Nachteil sind jedoch die erheblichen Kosten für diese teure Zusatzsensorik. Unter Umständen werden mehrere Kameras für die Gesamtförderstrecke benötigt, damit genau gemessen werden kann. Außerdem soll die Ansteuerung der Antriebe mit schneller zeitlicher Taktung von z.B. 4 ms erfolgen. Dementsprechend rasch muss die Auswertung der Kamerabilder stattfinden. Eine derartige Bildverarbeitung zur Erfassung der Produktpositionen kann - wenn überhaupt - nur mit sehr teurer Hardware diese zeitliche Taktung liefern.

Im Folgenden wird erläutert, wie die Realisierung der Steuerung der Anlage unter Verwendung von Künstlicher Intelligenz ermöglicht werden kann. Hierzu wird ein Maschinenlernmodell (im folgenden ML-Modell) trainiert, welches danach als Bestandteil der Steuereinheit CONTROL im tatsächlichen Betrieb der Förderstrecke die Bewegungskontrolle der Förderbänder C1, C2, C3, C4, C5 übernimmt. Trainieren lassen sich insbesondere künstliche neuronale Netze, rekurrente neuronale Netze, faltende neuronale Netze, Perzeptrone, bayessche neuronale Netze, Autoencoder, variationale Autoencoder, Gaußprozesse, Deep-Learning-Architekturen, Support-Vektor-Maschinen, datengetriebene Regressionsmodelle, k-nächste-Nachbarn-Klassifikatoren, physikalische Modelle und/oder Entscheidungs-bäume. Als Trainingsmethode eignen sich insbesondere Methoden aus dem Bereich des Reinforcement Learnings, zum Beispiel Policy-Gradienten-Verfahren.

Zu Zwecken des Trainings des ML-Modells kommt ein Systemmodell für die Förderstrecke zum Einsatz. Dieser digitale Zwilling der Förderstrecke kann z.B. eine auf physikalischen Gleichungen basierende Simulation sein (insbesondere über Unity oder NX MCD) oder ein neuronales Dynamik-Modell (typischerweise ein rekurrentes neuronales Netzwerk).

Das ML-Modell erhält für das Training folgende Zustandsinformationen aus dem Systemmodell:
- Bandposition des letzten Förderbands
   Jedes Förderband hat eine Markierung o.ä., wobei die Bandposition angibt, wo sich diese aktuell befindet. Dies ist relevant, da hierdurch die aktuelle Lage der Zielorte T ermittelt werden kann.
- Die aktuellen Geschwindigkeiten der Förderbänder
   Diese stimmen bei Interaktion zwischen dem ML-Modell und dem Systemmodell zu Trainingszwecken mit den von dem ML-Modell vorgegebenen Geschwindigkeiten überein.
- Produktpositionen der sich auf der Förderstrecke befindlichen Stückgüter
   Die Produktpositionen werden innerhalb des Systemmodells folgendermaßen bestimmt:
   Produkt-Registrierung und -vermessung: Auf dem ersten Förderband C1 wird am ersten Sensor S1.1 die Produktlänge eines neu eintreffenden Produktes gemessen, dessen Eintreffen durch den Zustandswechsel LOW-HIGH an diesem Sensor S1.1 erkannt wird. Solange das Signal auf HIGH steht, werden über die Zeit hinweg die zeitabhängigen Geschwindigkeiten v(C1)_t des Förderbandes C1 zeitlich aufintegriert. Die Integration wird beendet beim Übergang HIGH-LOW am Sensor S1.1, woraus sich die Produktlänge l(P) ergibt. Um Messungenauigkeiten zu vermeiden, ist es vorteilhaft, das erste Förderband zur Produktregistrierung mit einer konstanten Geschwindigkeit fahren zu lassen.
   Produkt-Verfolgung: es erfolgt eine rechnerische Positions-Aktualisierung. Die zeitabhängige Position des Produktes x(P)_t zum Zeitpunkt t wird neuberechnet, indem zu jedem Zeitschritt die aktuelle Geschwindigkeit des jeweiligen Förderbandes C, auf dem sich das Produkt vermutlich, also gemäß der berechneten Produktverfolgung, aktuell befindet, hinzuaddiert wird: x(P)_t = x(P)_{t-1} + v(C)_t.
   Schwierig ist die Modellierung eines Förderband-Wechsels, d.h. eines Produktübergangs von einem Förderband auf das nächste, z.B. von C1 auf C2. In dem Systemmodell sind die realen physikalischen Eigenschaften des Förderbandübergangs abgebildet. Diese realen physikalischen Gegebenheiten umfassen insbesondere die Reibungskoeffizienten der Bandoberflächen. Es werden also alle physikalischen Zusammenhänge, auch die Reibung, modelliert und berechnet. Hieraus lässt sich ermitteln, ob ein Produkt bei einem Übergang von einem schnelleren auf ein langsameres Förderband auf letzterem ein Stück rutscht, oder umgekehrt sich bei einem Übergang von einem langsameren auf ein schnelleres Förderband auf letzterem nicht sofort mit der Förderbandgeschwindigkeit mitbewegt.
   Produkt-Deregistrierung: Beim Erreichen des letzten Sensors S5 auf dem letzten Förderband C5 wird auch das Tracking der entsprechenden Produktposition eingestellt.
- Der aktuelle Zustand der Sensoren, also ein binäres Signal, welches aussagt, ob gerade ein Produkt durch die Lichtschranke fährt oder nicht.

Das ML-Modell erhält diese vier erläuterten Zustandsinformationen aus dem Systemmodell. Sie werden dem ML-Modell in der für die Ansteuerung der Antriebe vorgesehenen Taktung zur Verfügung gestellt, z.B. alle 4 ms. Dies wird von dem ML-Modell als Zeitscheibe angesehen. Auf diese Weise kann die KI in dieser Taktung Ansteuerinformation für die Antriebe ermitteln. Erstrebenswert für ein erfolgreiches Training des ML-Models ist es, dass die aus dem Systemmodell erhaltenen Zustandsinformationen Markov-Eigenschaft haben. D.h. der zeitlich folgende Zustand muss von dem ML-Modell antizipierbar sein unter Verwendung der aktuellen Zustandsinformationen und der von dem ML-Modell getroffenen Aktion, d.h. der Einstellung der Geschwindigkeiten der einzelnen Förderbänder. Im Folgenden wird beschrieben, wie dieser Anforderung entsprechende Zustandsinformationen basierend auf dem oben beschriebenen Systemmodell beschafft werden können. Es sollen also für den erfolgreichen Einsatz des ML-Modells geeignete Input-Features zur Verfügung gestellt werden. Hier besteht bei der betrachteten Problemdomäne, d.h. bei der beschriebenen Konstellation der Förderstrecke, hinsichtlich der Zustandsinformation der Produktpositionen folgendes Problem:
Wichtig ist die Erkenntnis, dass ML-Modelle eine definierte, gleichbleibende Anzahl an Eingabe-Variablen bzw. Input-Features benötigen. Dies lässt sich dadurch erklären, dass ein neuronales Netz die Eingabedaten als Vektor ansieht und mit einer Matrix aus im Rahmen des Trainings einzustellenden Gewichten multipliziert. Dies trifft jedoch auf die beschriebene Konstellation der Produktpositionen auf der Förderstrecke nicht zu: zu unterschiedlichen Zeitpunkten kann sich eine verschiedene Anzahl von Produkten gleichzeitig auf der Förderstrecke befinden. Zwingende Voraussetzung für das ML-Modell ist jedoch ein Eingabevektor mit konstanter Länge, wobei diese Länge der konstanten Anzahl an Eingabe-Variablen entspricht. Hierzu könnte z.B. so vorgegangen werden, dass die Produktpositionen der n vordersten Produkte dem ML-Modell übergeben werden. Da wie beschrieben das Treffen eines Faches auf dem letzten Förderband die zu erlernende Zielfunktion des ML-Modells sein kann, würde dies an sich funktionieren. Es würde jedoch nicht zu optimalen Ergebnissen führen, da gegebenenfalls weitere sich weiter hinten auf dem Förderband befindliche Produkte ausgeblendet werden. Um dem Rechnung zu tragen und hierdurch Eingabedaten für das ML-Modell mit hoher Qualität zu erhalten, müsste die Menge an Eingabedaten variieren, da die Anzahl der Pakete über der Zeit variieren kann. Damit kommt ein neuronales Netzwerk jedoch nicht zurecht.

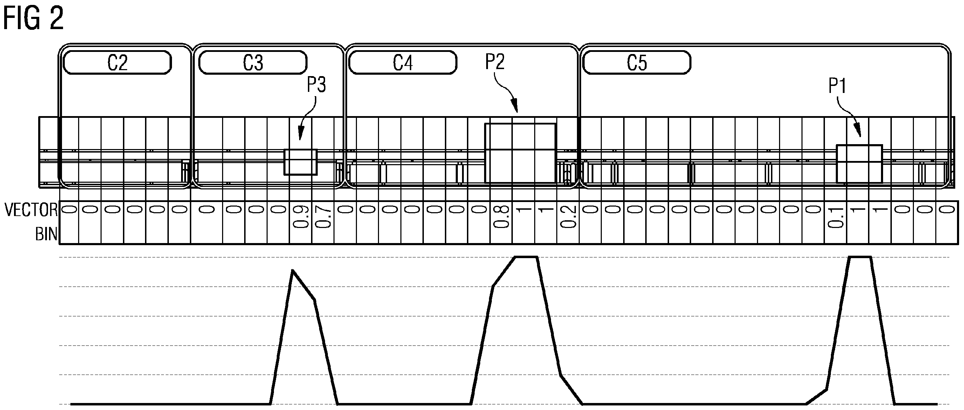

Um das erläuterte Problem zu vermeiden, werden die binären Lichtschrankensignale in Features umgewandelt, die ein ML-Modell in Form eines neuronalen Netzwerkes verarbeiten kann. Anhand der Figur 2, welche einen Ausschnitt aus einer Förderstrecke mit einer Aufteilung in gleich große Bins zeigt, wird das Vorgehen erläutert. Es sind im in der Figur 2 gezeigten Ausschnitt die Förderbänder C2, C3, C4, C5 dargestellt, wobei die Fahrtrichtung der Bänder nach rechts geht. Auf dem Förderband C5 befindet sich das Produkt P1, auf dem Förderband C4 das Produkt P2, und auf dem Förderband C3 das Produkt P3. Die Förderbänder C2, C3, C4, C5 werden gedanklich in Abschnitte BIN aufgeteilt, welche schematisch unterhalb der Förderstrecke eingezeichnet sind. Hierbei haben die Abschnitte BIN die gleiche Erstreckung in Fahrtrichtung. Dieses durch die Abschnitte BIN gebildete künstliche Grid überzieht die gesamte Förderstrecke.

Jedem der Abschnitte BIN wird ein Wert zwischen 0 und 1 zugewiesen, proportional zur Belegung des jeweiligen Abschnitts BIN mit einem Produkt. Dabei bedeutet 0, dass der jeweilige Abschnitt BIN leer ist. Eine 1 bedeutet, dass der jeweilige Abschnitt BIN komplett von einem Produkt überdeckt wird. Wird nur ein Teil des jeweiligen Abschnittes BIN mit einem Produkt überdeckt, so erhält der jeweilige Abschnitt BIN einen Wert entsprechend dem prozentualen Anteil seiner Belegung. Diese Werte bilden einen Produktpositions-Zustandsvektor VECTOR, dessen Werte beispielhaft gemäß den auf den Förderbändern C2, C3, C4, C5 befindlichen Positionen der Produkte P1, P2, P3 in die Abschnitte BIN eingetragen ist. Dieser Produktpositions-Zustandsvektor VECTOR, welcher die Belegung für jeden Abschnitt BIN enthält und somit die Produktpositionen angibt, hat stets eine konstante Länge und kann somit als Input-Feature der Produktpositionen für das ML-Modell verwendet werden. Dadurch wird die Modellierung der KI mittels eines neuronalen Netzes erst ermöglicht. Unten in der Figur 2 befindet sich eine grafische Darstellung der Werte des Produktpositions-Zustandsvektors VECTOR. Diese Darstellung dient nur zu Illustrationszwecken, eine Verarbeitung dieses kontinuierlichen Verlaufs der Vektorwerte durch das ML-Modell ist nicht vorgesehen.

Der beschriebene Produktpositions-Zustandsvektor VECTOR entspricht einer vollständigen Momentaufnahme der Förderstrecke mit allen darauf befindlichen Produkten, entsprechend einem Kamerabild. Daher reichen dem ML-Modell sehr wenige Zeitscheiben (ca. 10), um optimale Entscheidungen bzgl. der Bewegungskontrolle zu treffen, da ihm eine Gesamtansicht auf das System in Form aller Abschnitte BIN zur Verfügung steht. Bei alternativen Ansätzen hingegen, z.B. bei einer Modellierung mit Rekurrentem-Neuronalen-Netzwerk, bei welchen ausschließlich die Lichtschranken-Signale und Förderbandgeschwindigkeiten betrachtet werden, müssten viele Zeitscheiben (ca. 60) in hohen Taktraten zur Verfügung gestellt werden, um dem ML-Modell das Schätzen des Markov-Zustands zu ermöglichen.

Wie bereits ausgeführt haben die Abschnitte BIN die gleiche Erstreckung in Fahrtrichtung, z.B. 6 cm. Zur Erhöhung der Übersichtlichkeit wurde diese Erstreckung der Abschnitte BIN in der Figur deutlich größer eingezeichnet. Die Größe der Abschnitte BIN ist an sich frei wählbar. Ein wesentliches Kriterium ist die von dem ML-Modell benötigte Trainingszeit, welche mit zunehmender Anzahl an Abschnitten BIN stark ansteigt. Als gegenläufiges Kriterium ist zu bedenken, dass, sollte die Ausdehnung der Abschnitte BIN sehr groß gewählt werden, es passieren kann, dass sich mehrere Pakete in einem Abschnitt BIN befinden. Man erhält dann zuverlässig einen Markov-State, wenn die Abschnitte BIN klein genug gewählt werden, so dass sich maximal ein Produkt vollständig in einem Abschnitt BIN befinden kann.

Von Vorteil ist es, wenn die Einteilung in Abschnitte BIN an die Abstände zwischen den Sensoren angepasst ist. D.h. an der Position jedes Sensors befindet sich die Grenze zwischen zwei benachbarten Abschnitten BIN. Dies ist insbesondere dann sinnvoll, wenn wie weiter unten erläutert die Produktverfolgung an den Sensoren synchronisiert wird. Durch die Synchronisation an den Positionen der Sensoren wird eine lokale Modellierung bzw. ein lokales Binning auf den beobachteten Teilstrecken generiert. Jede Teilstrecke trägt eine vorab definierte Anzahl Features in Form der Vektorwerte der jeweiligen Abschnitte BIN bei, die einen Teil des gesamten Produktpositions-Zustandsvektor VECTOR für das ML-Modell sind.

Ferner kann das ML-Modell dem Produktpositions-Zustandsvektor VECTOR auch entnehmen, wenn mehrere Produkte kollidiert sind und im Anschluss gemeinsam über die Förderstrecke fahren. Anhand des Abstandes zwischen steigender und fallender Flanke in der grafischen Darstellung unten in Figur 2 und der aufgrund der Registrierung bekannten Produktlänge kann ermittelt werden, dass mehrere Produkte nacheinander ohne Lücke eine Lichtschranke passieren. Dies gilt es üblicherweise zu vermeiden, da eine Trennung der Produkte nicht mehr gezielt erreichbar ist oder Produkte bei einer Kollision beschädigt werden könnten.

Das ML-Modell lernt mittels der beschriebenen Zustandsinformationen, welche den Produktpositions-Zustandsvektor VECTOR enthalten, eine Steuerstrategie für die Förderstrecke. Die vier Zustandsinformationen bilden hierbei insgesamt einen Vektor konstanter Länge.

Für dieses Training des ML-Modells eignen sich insbesondere Methoden des verstärkenden Lernens (Reinforcement Learning). Für das Training wird hierbei eine Zielfunktion definiert, deren Art von der gewünschten Betriebsweise der Förderstrecke abhängt. Die Zielerreichung oder -verfehlung kann dann mittels Belohnung und/oder Bestrafung bewertet werden, wodurch der Lerneffekt für das ML-Modell entsteht. Bei einer Paketsortieranlage können z.B. parallel aktivierte Abschnitte BIN zweier Förderbänder durch einen entsprechenden negativen Reward bestraft werden. Das Binning ermöglicht es einem Neuronalen Netzwerk ferner z.B., Kollisionen zwischen zwei Produkten zu erkennen, da durch die Abschnitte BIN eine Nachbarschaftsbeziehung hergestellt wird. Dies ist insbesondere dann von Relevanz, wenn Kollisionen in einer auf Reinforcement Learning basierenden Steuerung negativ bestraft werden sollen, um diese zu vermeiden. Ohne das Binning-Grid bestünde keine Möglichkeit, auftretende Kollisionen in einem Eingabevektor mit definierter Länge abzubilden. Ferner ermöglicht das Binning zudem eine Kollisionserkennung in linearer Laufzeit (O(N) mit N=Anzahl der Pakete) statt O(N log(N)), wobei letzteres daraus resultieren würde, wenn man zunächst die Paketpositionen sortiert und dann jeweils benachbarte Pakete auf Kollision prüft. Dies ermöglicht eine rasche Steuerung des Systems in Echtzeit. Ein weiterer sinnvollerweise in die Zielfunktion zu implementierender Aspekt ist es, dass die Geschwindigkeitsunterschiede zwischen benachbarten Förderbändern klein sein sollten; hierdurch wird Rutschen und ähnliche Effekte bei den Bandübergängen vermieden.

Nach Abschluss des Trainings kann die KI die tatsächliche Steuerung übernehmen, d.h. am realen System arbeiten. Hierzu ist sie gleich der oder Teil der Steuereinheit CONTROL. Das ML-Modell berechnet somit Geschwindigkeiten für die einzelnen Förderbänder und die hierfür benötigten Ansteuersignale für die Antriebe. D.h. die Ausgabe des ML-Modells im tatsächlichen Betrieb ist pro Zeitscheibe, entsprechend der Taktung der Steuerung, eine Sollgeschwindigkeit pro Förderband.

Im tatsächlichen Betrieb wird das Systemmodell nicht mehr benötigt, da die Daten nun aus dem realen System stammen. Die Eingangsdaten, welches das ML-Modell für die Steuerung der Förderstrecke erhält, sind genauso zusammengesetzt wie die Zustandsinformationen beim Training. Dies bedeutet, dass das ML-Modell in der für die Steuerung der Förderstrecke erforderlichen Taktung die folgenden Daten erhält:
- Bandposition des letzten Förderbands
- Die aktuellen Geschwindigkeiten der Förderbänder
   Diese stimmen nicht zwangsläufig mit den von dem ML-Modell vorgegebenen Geschwindigkeiten überein. Denn im tatsächlichen Betrieb, wenn das trainierte ML-Modell die Förderstrecke steuert, kann es zu kleineren Abweichungen kommen z.B. dadurch, dass die Steuersignale verzögert die Antriebe erreichen oder das Verzögern/Beschleunigen der Förderbänder etwas Zeit in Anspruch nimmt.
- Produktpositionen der sich auf der Förderstrecke befindlichen Stückgüter
   Hierzu werden die tatsächlich gemessenen Signale der Sensoren verwendet, und dann wie oben hinsichtlich der Produktverfolgung im Systemmodell erläutert anhand der Geschwindigkeiten der Förderbänder Werte für die Positionen zwischen den Sensoren berechnet. Für die Bandübergänge ist ein einfacher Lösungsansatz, die Geschwindigkeit v(C1)_t von C1 so lange zu verwenden, wie sich der größte Teil des Produktes noch auf C1 befindet. Erst wenn mehr als die Hälfte des Produktes auf C2 liegt, werden zur weiteren Verfolgung der Produktposition x(P)_t die Geschwindigkeiten v(C2)_t von C2 verwendet. Alternativ können aber auch anteilig beide Geschwindigkeiten verwendet werden, in Abhängigkeit davon, welcher Anteil der Produktlänge l(P) auf dem jeweiligen Förderband liegt.
   Für diese Art der Produktverfolgung müssen nur der erste und der letzte Sensor verwendet werden. Dies besitzt den Nachteil, dass durch unsauberes Schätzen der Produktpositionen, z.B. hauptsächlich an den Förderbandübergängen, Fehler entstehen, die sich über die Zeit hinweg aufakkumulieren. Der Wechsel von einem ersten Förderband auf ein zweites ist deshalb kritisch, weil das Produkt nicht zwangsläufig auf dem zweiten Förderband sofort die Geschwindigkeit des zweiten Förderbandes annimmt. Dies kommt durch unterschiedliche Reibungskoeffizienten der Förderbandoberflächen und unterschiedliche Geschwindigkeiten der Förderbänder zustande. Wenn z.B. das erste Förderband eine viel höhere Geschwindigkeit aufweist als das zweite, wird das Produkt zumindest ein kleines Stück rutschen, bevor es durch die Haftreibung auf die Geschwindigkeit des zweiten Förderbandes abgebremst ist. Daher ist es sinnvoll, die Produktverfolgung lokal pro Förderband zu betreiben. In einem konkreten Ausführungsbeispiel aus Figur 1 wird das Produkt P auf dem Förderband C1 von Sensor S1.2 bis Sensor S2 auf dem Förderband C2 rechnerisch verfolgt, das heißt Fehler vom Produktübergang auf Förderband C2 werden nur bis zum Sensor S2 verfolgt. Bei Erreichen des Sensors S2 findet dann die Produktregistrierung auf dem Förderband C2 statt, wobei nicht erneut die Produktlänge bestimmt werden muss. Als Position des Produktes wird der Messwert des Sensors S2 verwendet, und von hier aus die Produktverfolgung neu gestartet. Es findet dann die Produktverfolgung vom Sensor S2 bis Sensor S3 auf Förderband C3 statt etc., wodurch eine Synchronisation an jeder Lichtschranke entsteht.
   Für die Synchronisation an den Positionen der Sensoren ist es ferner vorteilhaft, die abfallende Flanke in der grafischen Darstellung unten in Figur 2 zu verwenden. Wie bereits erläutert, kann es bei einem Übergang von Förderband zu Förderband zu einem Rutschen des Produktes kommen, was nach einer Zeit abgebremst wird, so dass das Produkt ohne Rutschen auf dem jeweiligen Förderband fährt. Dieses Rutschen wird bei Verlassen der Lichtschranke mit dem hinteren Ende des Produktes wahrscheinlicher abgeschlossen sein als bei Erreichen der Lichtschranke mit dem vorderen Teil des Produktes.
   Auf diese Weise ergibt sich der Produktpositions-Zustandsvektor VECTOR basierend auf Messwerten der Sensoren in Kombination mit einer rechnerischen Produktverfolgung zwischen den Sensoren.
- Der aktuelle Zustand der Sensoren, also das tatsächliche Messsignal, welches aussagt, ob gerade ein Produkt durch die Lichtschranke fährt oder nicht.

Welche der erläuterten Input-features von dem ML-Modell für die Steuerung in welchem Ausmaß verwendet werden, wird dem ML-Modell nicht vorgegeben. Dies hat sich das ML-Modell während des Trainings erarbeitet.

Von besonderem Vorteil bei dem beschriebenen Einsatz eines ML-Modells zu Zwecken der Bewegungskontrolle industrieller Maschinen ist, dass die Erarbeitung der anzuwendenden Steuerstrategie bei dem ML-Modell in der Größenordnung von Tagen liegt, während für die Erstellung/Programmierung konventioneller Steueralgorithmen bis zu Jahren benötigt würden.

Bei dem erläuterten Einsatz des ML-Modells handelt es sich zudem um eine kostengünstige und wenig Hardware-intensive Lösung, denn es wird keine teure Zusatzsensorik wie z.B. Kameras für das Tracking der Produkte benötigt, da das durch die Abschnitte BIN gebildete Grid über die gesamte Förderstrecke analog zu einem Kamerabild ist. Insbesondere können die von der Motion-Control-Steuerung geforderten hohen zeitlichen Taktraten ohne Probleme realisiert werden, so dass eine Steuerung mit einem 4 ms oder sogar kürzeren Zeittakt möglich ist. Würde alternativ eine Kamerabild ausgewertet, um die Positionen aller Produkte zu bestimmen, müsste mit einer Taktung von ca. 100 ms gerechnet werden.

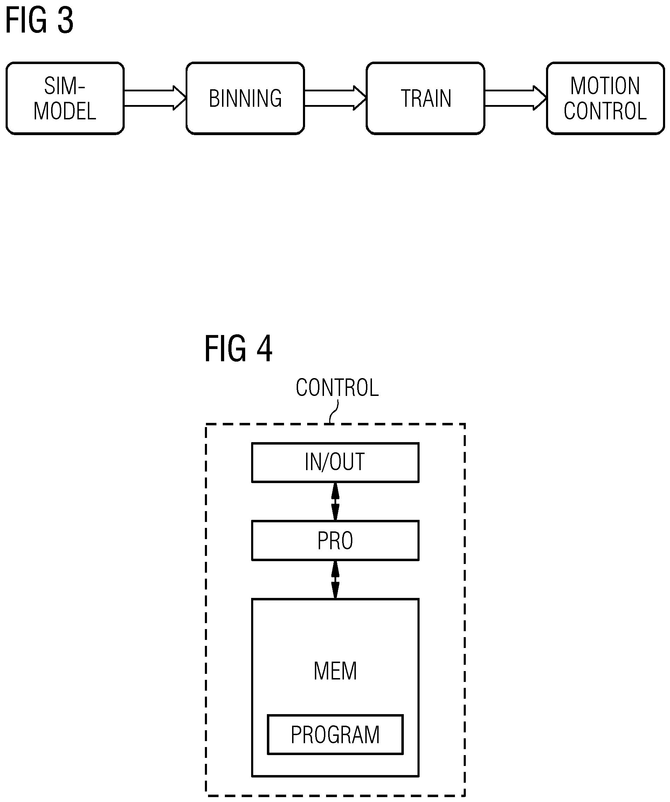

Zusammenfassend zeigt Figur 3 ein Ablaufdiagramm zu dem geschilderten Vorgehen. Im ersten Schritt SIM-MODEL wird das Simulationsmodell erstellt, welches die reale Förderstrecke abbildet. In einem zweiten Schritt BINNING werden die Abschnitte BIN definiert, um aus dem Simulationsmodell geeignete Eingabevektoren für das ML-Modell erstellen zu können. In einem dritten Schritt TRAIN lernt das ML-Modell die optimale Steuerung der Förderstrecke. In einem vierten Schritt MOTION CONTROL steuert das ML-Modell basierend auf dem im vorhergehenden Schritt gelernten Verhalten die Förderstrecke, indem die Geschwindigkeiten bzw. Beschleunigungen für die verschiedenen Förderbänder vorgegeben werden. Dies ist die Phase der Inferenz, in der die von dem neuronalen Netz, während dem Schritt TRAIN erlernten Gewichte beibehalten und auf das reale System angewandt werden.

Figur 4 zeigt, wie die Steuereinheit CONTROL aufgebaut sein kann, welche das ML-Modell implementiert. Während die im Folgenden näher erläuterten Bestandteile in der Figur einfach vorhanden sind, ist es auch möglich, dass diese in mehrfacher Ausführung vorhanden sind, z.B. als verteiltes System. Auf diese Weise kann die Funktionalität der Steuereinheit CONTROL auf mehrere, gegebenenfalls hierarchisch miteinander verknüpfte, Systeme aufgeteilt werden. Dieses oder diese können sich in der Nähe der Förderstrecke oder an einem anderen Ort befinden.

Das Steuereinheit CONTROL umfasst eine Recheneinheit bzw. einen Prozessor PRO. Dieser ist verbunden mit einem Speicher MEM, in welchem ein Computerprogramm PROGRAM abgelegt ist. Bei dem Speicher MEM handelt es sich vorzugsweise um ein nicht-flüchtiges computerlesbares Datenspeichermedium. Die Speicherung kann auf jegliche Weise erfolgen, welche geeignet ist, die Auslesbarkeit durch eine Recheneinheit zu gewährleisten, wie durch magnetische Speicherung, z.B. mittels Diskette, optische Speicherung, z.B. mittels CD, magneto-optische Speicherung, ROM (Read Only Memory) Speicherung, RAM (Random Access Memory) Speicherung, EPROM (Erasable Programmable Read-Only Memory), EEPROM (Electrically Erasable Programmable Read-Only Memory), Flash-Memory.

Durch Ausführen der Instruktionen des Programms PROGRAM in dem Prozessor PRO können die Schritte der oben erläuterten Vorgehensweise durchgeführt werden. Dies gilt insbesondere für die Schritte TRAIN und MOTION CONTROL der Figur 3, während die Schritte SIM-MODEL und BINNING gegebenenfalls schon im Vorfeld erfolgt sind. Hierzu ist der Prozessor PRO mit einer Ein- und Ausgabeeinheit IN/OUT verbunden, über welche Informationen zwischen der Steuereinheit CONTROL und anderen Komponenten und/oder einem Nutzer ausgetauscht werden können. Diese Schnittstelle kann hierbei auf geeignete Weise ausgestaltet sein, z.B. über Funk oder über Kabel, und die Kommunikation kann über geeignete Standards erfolgen.

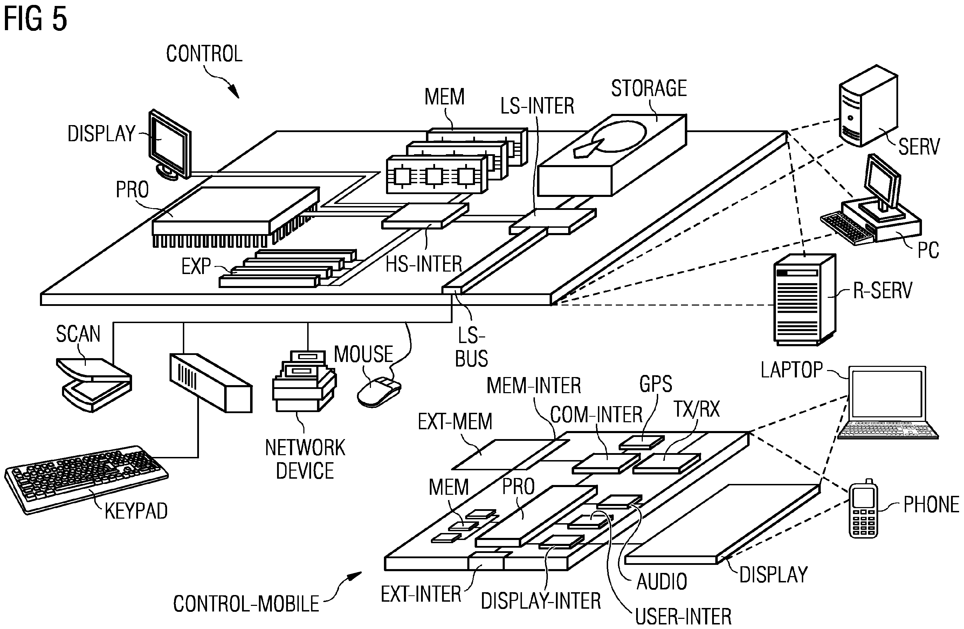

Figur 5 zeigt beispielhaft, wie die Steuereinheit CONTROL der Figur 4 ausgestaltet sein kann: dies kann ein generischer Computer CONTROL oder ein mobiler generischer Computer Steuereinheit CONTROL-MOBILE sein. Hierbei repräsentiert der generischer Computer CONTROL verschiedene Arten digitaler Computergeräte, so wie z.B. Desktopcomputer, Workstations, Server, Blade Server, Mainframes, oder andere geeignete Geräte. Der mobile generische Computer CONTROL-MOBILE steht entsprechend für verschiedene Arten mobiler digitaler Computergeräte, so wie z.B. Laptops, PDAs, Mobiltelefone oder Smart Phones, oder andere geeignete Geräte. Wenn anhand von Figur 5 konkret und detailliert verwendbare Komponenten aufgezeigt und erläutert werden, ist dies beispielhaft zu verstehen; die Realisierung der Erfindung ist nicht auf diese Komponenten beschränkt.

Der Computer CONTROL umfasst einen Prozessor PRO, einen Speicher MEM, und dazwischen ein Hochgeschwindigkeits-Interface HS-INTER. Ferner sind Hochgeschwindigkeits-Expansion Ports EXP und ein Low-speed-Interface LS-INTER an das Hochgeschwindigkeits-Interface HS-INTER angeschlossen. An das Low-speed-Interface LS-INTER sind das Speichergerät STORAGE und der Low-speed Bus LS-BUS angeschlossen. Die Komponenten PRO, MEM, STORAGE, HS-INTER, EXP, LS-INTER sind über geeignete Verbindungen/Busse verbunden, und können auf einem gemeinsamen Motherboard montiert sein.

Während in Figur 5 die Komponenten des Computers CONTROL in einfacher Ausführung dargestellt sind, ist es auch möglich, manche oder alle dieser Komponenten mehrfach vorzusehen. Auch kann der Computer CONTROL mehrere miteinander verbundene Computer umfassen, welche sich gegebenenfalls an verschiedenen Orten befinden.

Der Prozessor PRO kann Instruktionen verarbeiten, die im Computer CONTROL ausgeführt werden sollen, wobei die Instruktionen insbesondere im Speicher MEM oder im Speichergerät STORAGE gespeichert sein können. Informationen, insbesondere Ergebnisse der Verarbeitung im Prozessor PRO, können mittels einer GUI auf einer an das Hochgeschwindigkeits-Interface HS-INTER angeschlossene Anzeige wie dem Bildschirm DISPLAY grafisch ausgegeben werden.

Der Speicher MEM dient der Speicherung von Informationen innerhalb des Computers CONTROL. Hierbei kann es sich um einen flüchtigen Speicher oder einen nicht-flüchtigen Speicher handeln. Er kann mehrere Speicherzellen umfassen. Bei dem Speichergerät STORAGE handelt es sich vorzugsweise um ein Massenspeichergerät für ein computerlesbares Medium. Hierzu kann es z.B. ein Diskettenlaufwerk, eine Festplatte, ein Laufwerk für optische Speicherplatten, ein Bandgerät, ein Flash Memory-Speichergerät, oder auch eine Reihe von Geräten, z.B. in einer Storage Area Networks Konfiguration, umfassen.

Das Hochgeschwindigkeits-Interface HS-INTER ist zuständig für Bandbreiten-intensive Vorgänge innerhalb des Computers CONTROL, während das Low-speed-Interface LS-INTER für solche mit geringerem Bandbreitenbedarf verwendet wird. Hierzu ist das Hochgeschwindigkeits-Interface HS-INTER verbunden mit dem Speicher MEM, dem Bildschirm DISPLAY, gegebenenfalls über einen Grafikprozessor, den Hochgeschwindigkeits-Expansion Ports EXP, welche diverse Erweiterungskarten aufnehmen können. An das Low-speed-Interface LS-INTER angebunden sind das Speichergerät STORAGE und der Low-speed Bus LS-BUS, an welchem sich Low-Speed-Expansion Ports befinden können. Letztere können verschiedene Kommunikationsanschlüsse aufweisen, z.B. USB, Bluetooth, Ethernet, drahtloses Ethernet. An diese können diverse Ein- und/oder Ausgabevorrichtungen angeschlossen sein, z.B. eine Tastatur KEYPAD, eine Maus MOUSE, ein Scanner SCAN, ein Netzwerkgerät NETWORK DEVICE wie ein Switch oder ein Router. Diese Aufgabenverteilung zwischen den beiden Interfaces HS-INTER und LS-INTER ist beispielhaft und kann auch anders organisiert sein.

Der Computer CONTROL kann auf verschiedene Arten implementiert sein, wie am rechten Rand der Figur zu sehen ist. Z.B. kann er implementiert sein als ein Personal Computer PC, als ein Standard-Server SERV, oder auch als eine Gruppe solcher Sever wie z.B. eine Serverfarm, oder als ein Rack-Server-System R-SERV oder Bestanteil eines solchen Systems.

Der mobile Computer CONTROL-MOBILE umfasst einen Prozessor PRO, einen Speicher MEM, eine Ein- und Ausgabevorrichtung DISPLAY, ein Kommunikations-Interface COM-INTER, einen Transceiver TX/RX. Die Komponenten PRO, MEM, COM-INTER, TX/RX sind über geeignete Verbindungen/Busse verbunden, und können auf einem gemeinsamen Motherboard oder in anderer geeigneter Weise montiert sein. Ferner kann eine weitere Speichereinrichtung, wie z.B. ein Mikrodrive o.ä., vorgesehen sein, um weitere Speicherungsmöglichkeiten zu schaffen.

Der Prozessor PRO kann Instruktionen innerhalb des mobilen Computers CONTROL-MOBILE ausführen, insbesondere solche, die im Speicher MEM abgelegt sind. Er kann als Chip oder Chipset implementiert sein, welcher eine oder mehrere analoge oder digitale Prozesseinheiten enthält. Zuständig kann der Prozessor PRO u.a. sein für die Koordination der anderen Komponenten des mobilen Computers CONTROL-MOBILE, so z.B. für die Steuerung der Benutzerschnittstelle(n), für Applikationen, welche auf dem mobilen Computers CONTROL-MOBILE laufen, und für die drahtlose Kommunikation des mobilen Computers CONTROL-MOBILE. Zwischen dem Nutzer des mobilen Computers CONTROL-MOBILE und dem Prozessor PRO findet eine Informationsübertragung statt über das Nutzer-Interface USER-INTER, beispielsweise über Sprach- Ein/Ausgabe, sowie über das Display-Interface DISPLAY-INTER, beispielsweise über Text- Ein/Ausgabe. Die Ein- und Ausgabevorrichtung DISPLAY kann z.B. auf der TFT LCD (Thin-Film-Transistor Liquid Crystal Display) oder der OLED (Organic Light Emitting Diode) Technologie basieren.

Ferner ist ein an den Prozessor PRO angebundenes externes Interface EXT-INT vorgesehen, über welches eine Nahfeldkommunikation des mobilen Computers CONTROL-MOBILE mit anderen Geräten möglich ist. Über das externe Interface EXT-INT kann drahtgebunden und/oder über Funk kommuniziert werden.

Der Speicher MEM dient der Speicherung von Informationen innerhalb des mobilen Computers CONTROL-MOBILE und kann hierzu z.B. als flüchtiger oder nicht-flüchtiger Speicher umfassend eine oder mehrere Speichereinheiten implementiert sein. Zusätzlich kann ein Erweiterungsspeicher EXT-MEM vorgesehen sein, welches mit dem mobilen Computer CONTROL-MOBILE über das Erweiterungs-Interface MEM-INTER verbunden ist, z.B. eine Schnittstelle für ein SIMM (Single In Line Memory Module) oder ein SIM (Subscriber Identity Module). Der Erweiterungsspeicher EXT-MEM bietet zusätzliche Speicherkapazität für den mobilen Computer CONTROL-MOBILE und kann auch diverse Applikationen speichern. Z.B. kann der Erweiterungsspeicher EXT-MEM als Sicherheitsmodul für den mobilen Computer CONTROL-MOBILE dienen, indem Identifikationsinformationen dort abgelegt werden.

Der mobile Computer CONTROL-MOBILE kann drahtlos über den Transceiver TX/RX kommunizieren, welcher hierzu über Mittel zur digitalen Signalverarbeitung verfügt. Das Kommunikations-Interface COM-INTER ermöglicht die Kommunikation über geeignete Protokolle, wie z.B. GSM, SMS, MMS, CDMA, TDMA, PDC, WCDMA, CDMA2000, GPRS, EDGE, UMTS, LTE, sowie Kommunikationsprotokolle der 5ten oder höherer Generationen. Zusätzlich zum hierfür verwendeten Transceiver TX/RX kann ein nicht dargestellter Transceiver für Nahfeldkommunikation wie z.B. Bluetooth, WiFi o.ä. vorgesehen sein. Schließlich kann auch ein GPS-Modul GPS vorgesehen sein, um ortsbezogene Dienste verwenden zu können. Mittels des Audio-Codec AUDIO können empfangene Audioinformationen, welche insbesondere Instruktionen eines Nutzers umfassen können, in vom mobilen Computer CONTROL-MOBILE verarbeitbare digitale Informationen umgewandelt werden; entsprechend können unter Verwendung des Audio-Codec AUDIO vom Nutzer erfassbare Klanginformationen generiert werden.

Wie auf der rechten Seite der Figur zu sehen, ist der mobile Computer CONTROL-MOBILE vorzugsweise als Smartphone PHONE oder Laptop LAPTOP implementiert.

Die Interaktion zwischen dem Nutzer und dem Computer CONTROL oder dem mobilen Computer CONTROL-MOBILE kann auf verschiedenste Weise erfolgen und ist nicht auf die konkrete Darstellung der Figur 5 beschränkt. Jegliche sensorische Informationsübermittlung (sichtbar, hörbar, taktil wahrnehmbar) ist möglich.

Während die Komponenten des Computers CONTROL und des mobilen Computers CONTROL-MOBILE getrennt beschrieben wurden, ist es auch möglich, einen Computer einzusetzen, welcher sowohl Komponenten des Computers CONTROL, als auch des mobilen Computers CONTROL-MOBILE umfasst.

Das in Figur 4 gezeigte Computerprogramm PROGRAM kann in jedem der Speicher MEM, STORAGE, EXT-MEM der Figur 5 abgelegt sein, auch verteilt auf mehrere Speicher. Ferner kann eine Speicherung alternativ oder zusätzlich auch Cloud-basiert erfolgen.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

## Patentansprüche

1. Verfahren zur Steuerung einer Förderstrecke für Stückgut (P, P1, P2, P3), wobei
- die Förderstrecke eine Mehrzahl von sich aneinander anschließender Teilförderstrecken (C1, C2, C3, C4, C5) umfasst, welche jeweils von einem Antrieb (A1, A2, A3, A4, A5) angetrieben werden,
- sich an zumindest manchen der Teilförderstrecken (C1, C2, C3, C4, C5) einer oder mehrere Sensoren (S1.1, S1.2, S2, S3, S4, S5) zur Detektion von Stückgut (P, P1, P2, P3) befinden,
- die Steuerung der Antriebe (A1, A2, A3, A4, A5) mittels einer Recheneinheit (CONTROL, CONTROL-MOBILE) mit einem Machine-Learning-Modell erfolgt,
- das Machine-Learning-Modell hierzu wiederholt Eingangsdaten umfassend einen Vektor (VECTOR) einer festen Länge empfängt, wobei jedes Vektorelement einem Abschnitt (BIN) der Förderstrecke zugeordnet ist und eine aktuelle anteilige Belegung des jeweiligen Abschnitts (BIN) mit einem Stückgut (P, P1, P2, P3) angibt, wobei die Förderstrecke in eine Mehrzahl der gleich großen Abschnitte (BIN) aufgeteilt ist.

2. Verfahren nach Anspruch 1, bei dem
das Machine-Learning-Modell aktualisierte Eingangsdaten in einer zeitlichen Taktung empfängt, und
in der gleichen Taktung Informationen ausgibt über eine einzustellende Geschwindigkeit für jede Teilförderstrecke (C1, C2, C3, C4, C5).

3. Verfahren nach Anspruch 1 oder 2, bei dem die anteilige Belegung ermittelt wird aus Messergebnissen von Sensoren (S1.1, S1.2, S2, S3, S4, S5) und Geschwindigkeiten von Teilförderstrecken (C1, C2, C3, C4, C5).

4. Verfahren nach Anspruch 3, bei dem
für ein bestimmtes Stückgut (P, P1, P2, P3) die aktuelle anteilige Belegung im Zeitverlauf ermittelt wird, indem ein Sensor (S1.1, S1.2, S2, S3, S4, S5) das Stückgut (P, P1, P2, P3) detektiert und dieses Messergebnis dem oder den jeweiligen die entsprechende Position enthaltenden Abschnitten (BIN) zugewiesen wird,
bis zum nächsten Sensor (S1.1, S1.2, S2, S3, S4, S5) eine rechnerische Ermittlung der Position des Stückgutes (P, P1, P2, P3) erfolgt unter Verwendung der Geschwindigkeit der jeweiligen Teilförderstrecke (C1, C2, C3, C4, C5) und dieses Rechenergebnis dem oder den jeweiligen die entsprechende Position enthaltenden Abschnitten (BIN) zugewiesen wird,
der nächste Sensor (S1.1, S1.2, S2, S3, S4, S5) das Stückgut (P, P1, P2, P3) detektiert und dieses Messergebnis dem oder den jeweiligen die entsprechende Position enthaltenden Abschnitten (BIN) zugewiesen wird.

5. Verfahren nach einem der Ansprüche 1 bis 4, bei dem jedes Vektorelement die aktuelle anteilige Belegung mit einem nicht-binären Wert angibt, vorzugsweise mit einem Zahlenwert zwischen 0 und 1.

6. Verfahren nach einem der Ansprüche 1 bis 5, bei dem die Eingangsdaten ferner umfassen:
- aktuelle Informationen betreffend zumindest eine Position von zumindest einer Stelle auf einer, insbesonders der letzten, Teilförderstrecke (C1, C2, C3, C4, C5),
und/oder
- Informationen betreffend die aktuellen Geschwindigkeiten der Teilförderstrecken (C1, C2, C3, C4, C5),
und/oder
- aktuelle Messergebnisse der Sensoren (S1.1, S1.2, S2, S3, S4, S5).

7. Verfahren nach einem der Ansprüche 1 bis 6, bei dem vor der Steuerung der Förderstrecke das Machine-Learning-Modell trainiert wird,
wobei zum Training dem Machine-Learning-Modell Eingangsdaten umfassend den Vektor (VECTOR) der festen Länge vorgegeben werden, wobei die Vektorelemente aus einer Simulation der Förderstrecke ermittelt werden.

8. Verfahren nach Anspruch 7, bei dem
das Training als verstärkendes Lernen erfolgt, bei welchem zur Ermittlung einer Belohnung oder Bestrafung eine Zielfunktion eingesetzt wird, welche umfasst:
- Erreichen einer vorgegebenen Stelle auf der letzten Teilförderstrecken (C1, C2, C3, C4, C5) durch ein Stückgut (P, P1, P2, P3),
und/oder
- Kollision mehrerer Stückgüter (P, P1, P2, P3) auf der Förderstrecke,
und/oder
- Ähnlichkeit von Geschwindigkeiten benachbarter Teilförderstrecken (C1, C2, C3, C4, C5),
und/oder
das Einhalten eines Mindest- oder Zielabstand zwischen zwei Stückgütern (P, P1, P2, P3).

9. Vorrichtung oder System zur Datenverarbeitung (CONTROL), umfassend Mittel zur Ausführung des Verfahrens nach einem der Ansprüche 1 bis 8.

10. Computerprogramm (PROGRAM), umfassend Befehle, die bei der Ausführung des Programms durch einen Computer diesen veranlassen, die Schritte des Verfahrens nach einem der Ansprüche 1 bis 8 auszuführen.

11. Computerlesbares Speichermedium (MEM) mit einem Computerprogramm (PROGRAM) nach Anspruch 10.

12. Datenträgersignal, das das Computerprogramm (PROGRAM) nach Anspruch 10 überträgt.
